# EUROPEAN PATENT APPLICATION

(11) **EP 3 034 467 A1**
(43) Date of publication of application: **22.06.2016**
(21) Application number: 14199464.0
(22) Date of filing: 19.12.2014
(51) Int. Cl.: C01B 31/04, C08G 73/00, G01N 27/30, H01G 11/32, H01M 4/133, H01M 10/00, H01M 6/40

(54) **A method and associated apparatus**

(71) Applicant: Nokia Technologies OY, 02610 Espoo (FI)
(72) Inventor: Wei, Di, Cambridge, CB3 0FA (GB); Borini, Stefano, Cambridge, CB3 0FA (GB)
(74) Representative: Potter Clarkson LLP

(57) **Abstract**

The present disclosure provides a method of preparing a graphene oxide composite comprising (i) contacting (a) an aqueous solution comprising graphene oxide with (b) at least one polymerisable amine monomer and (c) at least one acid; and (ii) adding a polymerising initiator to the mixture obtained in step (i). Associated apparatus are also described.

## Description

The present disclosure relates to the field of graphene oxide composites and associated apparatus. In particular, the disclosure concerns the preparation of a graphene oxide composite from aqueous solutions comprising graphene oxide and associated apparatus.

Electrically conducting polymers have attracted interest for use in electronic components, for example as electrodes. Electrochemical capacitors (such as supercapacitors) may include electrically conducting polymer electrode components. However, the formation of electrically conducting polymers, such as those suitable for use in electronic components may be difficult.

One or more aspects/embodiments of the present disclosure may or may not address one or more of the issues associated with the formation of electrically conducting polymers.

The listing or discussion of a prior-published document or any background in this specification should not necessarily be taken as an acknowledgement that the document or background is part of the state of the art or is common general knowledge.

According to a first aspect of the disclosure there is provided, a method of preparing a graphene oxide composite, which method comprises:
(i) contacting (a) an aqueous solution comprising graphene oxide with (b) at least one polymerisable amine monomer and (c) at least one acid; and
(ii) adding a polymerising initiator to the mixture obtained in step (i).

This method of preparing a graphene oxide composite may provide a high ratio of GO with respect to the polymerisable amine monomer used. A high concentration of graphene oxide within the composite may be advantageous because it can enhance the mechanical property of the composite and can provide a highly conductive composite material.

By the term "at least one" we mean that the method may use one or more than one of the components defined. For example, the method of the invention may be conducted using one type of polymerisable amine monomer and one acid, or a combination of one, two, three or four different types of polymerisable amine monomers maybe used in combination with one, two, three or four different types of acids.

By the term "graphene oxide" we mean any oxidised form of graphene; for example, graphene oxide that has been prepared by oxidising and exfoliating graphite. As used herein, the term graphene oxide encompasses graphene oxide that may comprise impurities remaining from the process used to prepare the graphene oxide, the process used to prepare the aqueous solution comprising graphene oxide and/or the method described herein. The graphene oxide may also comprise solvent and/or suspended or dissolved compounds present in the aqueous solution.

By the term "polymerisable amine monomer" we mean any single molecule amine compounds (monomers) that when reacted with a polymerising initiator will form a polymer. Examples include, but are not limited to primary amine monomers, for example aromatic primary amine monomers, such as aniline and/or tertiary amine monomers, such as isocyanate based compounds, for example toluene diisocyanate and related compounds.

In one aspect, it is preferred that the polymerisable amine monomer is a liquid.

By the term "polymerising initiator" we mean a source of any chemical species that reacts with a monomer (single molecule that can form chemical bonds) to form an intermediate compound capable of linking successively with other monomers into a polymeric compound.

In an aspect of the present disclosure the polymerising initiator is water soluble. That is, the polymerising initiator has a solubility in water of at least about 50 g/100 mL at 20 °C, for example, at least about 60 g/100 mL at 20 °C, such as 80 g/100ml at 20 °C. Examples of polymerising initiators that can be used in the method of the present invention, include, but are not limited to at least one of (NH₄)₂S₂O₈, FeCl₃, light (for example by photochemically exposing the reactants to radiation of a suitable wavelength, typically from about 190 to about 420 nm (such as monochromatic radiation, e.g. 254 nm)) and/or radiation such as Gamma rays.

The term "adding", also includes "introducing" a polymerising initiator as previously defined to a reaction mixture where (a) an aqueous solution comprising graphene oxide has been contacted with (b) at least one polymerisable amine monomer and (c) at least one acid or "bringing a polymerising initiator as previously defined into association with" (a) an aqueous solution comprising graphene oxide that has been contacted with (b) at least one polymerisable amine monomer and (c) at least one acid.

For example, the process of the invention may include applying a source of radiation (such as UV or Gamma rays) to a reaction mixture where (a) an aqueous solution comprising graphene oxide has been contacted with (b) at least one polymerisable amine monomer and (c) at least one acid, in order to initiate the polymerisation reaction or to activate a polymerising initiator which in turn initiates the polymerising reaction.

The method of the present disclosure may be carried out batch-wise or continuously. Any suitable apparatus may be used, such as beakers, round bottomed flasks, static mixers, tubular reactors, stirred tank reactors or other industrial scale reactors. The apparatus used should be stable to acid and should not react with either the reactants or products within the taught ranges of temperature, pressure etc.

By the term "aqueous solution" we mean a water based solution; that is a solution in which the major component is water. As used herein, the term aqueous solution encompasses water that may also comprise suspended or dissolved compounds or compositions. It is to be understood that the aqueous solution may comprise other dissolved compounds in the form of salts in addition to the graphene oxide.

Wherever the word "about" is employed herein in the context of ratios amounts (e.g. relative amounts of individual constituents in a composition or a component of a composition), temperatures, pressures, times, pH values, concentrations, it will be appreciated that such variables are approximate and as such may vary by ± 10%, for example ± 5% and preferably ± 2% (e.g. ± 1%) from the numbers specified herein.

In an aspect of the present disclosure, from about 10% to about 99% of the water present in the reaction after step (i) has been conducted is removed before the polymerising initiator is added in step (ii). For example, from about 20% to about 80% of the water is removed, such as from about 30% to about 70% of the water is removed before the polymerising initiator is added in step (ii). For example, at least about 10%, 20%, 30%, 40%, 50%, 60%, 70%, 80%, 90% or 99% of the water present in the reaction after step (i) is removed before the polymerising initiator is added in step (ii).

In an aspect, the present invention provides a method for the preparation of a graphene oxide composite comprising the steps of:
(i) adding at least one polymerisable amine monomer to an aqueous solution comprising graphene oxide;
(ii) adding at least one acid to the solution obtained in step (i);
(iii) removing from about 10% to about 99%, such as from about 20% to about 80%, or from about 30% to about 70%, of the water present in the solution obtained in step (ii); and
(iv) adding a polymerising initiator to the remaining solution obtained in step (iii).

In an aspect of the disclosure in step (iii) at least about 10%, 20%, 30%, 40%, 50%, 60%, 70%, 80%, 90% or 99% of the water present in the reaction after step (i) is removed before the polymerising initiator is added in step (ii).

In an aspect of the present disclosure, the aqueous solution comprising graphene oxide is a graphene oxide ink. By graphene oxide ink we mean an aqueous solution in which graphene oxide has been dispersed. Typically, the graphene oxide used in the graphene oxide ink may be any suitable graphene oxide. For example, the graphene oxide may have been in the form of graphene oxide flakes.

The graphene oxide used in the graphene oxide ink may be produced by any method of producing graphene oxide. Known methods include, but are not limited to, graphene oxide prepared by the Hummer method (Journal of the American Chemical Society 80 (6): 1339), the Staudenmaier method (Ber. Dtsch. Chem. Ges., 1898, 31, 1481-1487) or the Hofmann method (Verlag der Zeitschrift für Naturforschung B, vol. 17, pp. 150-153, 1962).

In the present disclosure, the at least one acid is preferably a Bronsted acid. Examples of Brønsted acids suitable for use in the method of the present disclosure include, but are not limited to, ascorbic acid, HCl, HBr, HClO₄, HNO₃ and H₂SO₄, or mixtures thereof. In a preferred aspect, the at least one acid is selected from HCl and H₂SO₄, or mixtures thereof.

The method of the present disclosure can be used to provide a graphene oxide composite. An electronic component may be formed, at least in part, of the graphene oxide composite of the present disclosure. The electronic component may comprise an electrode or a sensor, such as a humidity sensor, or a capacitor or a supercapacitor.

In order for the graphene oxide composite to be used in an electronic component, the method of the present disclosure may also comprise a step in which the composite is removed from the reaction vessel and diced and/or further functionalised to enable it to be incorporated into an electronic component.

In an aspect of the disclosure the graphene oxide composite may be used in an electronic component without any further purification.

In another aspect, the graphene oxide composite may be further purified using such techniques known in the art. For example, the graphene oxide composite solid may be washed and/or dried.

It is envisaged that any aqueous solution comprising graphene oxide may be used in the method of the present disclosure. The level of graphene oxide present in the aqueous solution may be from about 0.5 mg/mL to about 10 mg/mL, or from about 1 mg/ml to about 9mg/ml or from about 2mg/ml to about 8mg/ml or from about 3mg/ml to about 7mg/ml or from about 4mg/ml to about 6mg/ml, such as 1, 2, 3, 4, 5, 6, 7, 8 or 9 mg/mL.

For the avoidance of doubt, in this specification when we use the term comprising or comprises we mean that the composition or formulation or component being described must contain the listed ingredient(s) but may optionally contain one or more additional ingredients. When we use the term consisting essentially of or consists essentially of we mean that the composition or formulation or component being described must contain the listed ingredient(s) and may also contain other small (for example up to 5% by weight, or up to 1% by weight or up to 0.1% by weight) ingredients, provided that any additional ingredients do not affect the essential properties of the composition, formulation or component. When we use the term consisting of or consists of we mean that the composition, formulation or component being described must contain the listed ingredient(s) only with no detectable amounts of other ingredients.

In an aspect of the disclosure, the ratio of the percentage volume of aqueous solution comprising graphene oxide to polymerisable amine monomer is from about 10:0.5 to about 10:10, such as about 10:1 or about 10:2. For example, if the volume of aqueous solution comprising graphene oxide is about 5 mL, the volume of the at least one polymerisable amine monomer may be from about 0.1 mL to about 0.5 mL.

In a further aspect of the disclosure, the ratio of the percentage volume of aqueous solution comprising graphene oxide to polymerisable amine monomer to acid is from about 10:0.5:0.5 to about 10:5:5, such as from about 10:1:1 or from about 10:2:2. For example, if the volume of aqueous solution comprising graphene oxide is 0.5 mL, the volume of the polymerisable amine monomer may be 0.05 mL and the volume of acid may be 0.05 mL. Typically, in an aspect of the disclosure the volume of the at least one polymerisable amine monomer and the volume of the at least one acid are about the same. However, it would be appreciated by the person skilled in the art that the volume of the at least one polymerisable amine monomer and the volume of the at least one acid may be different depending on the at least one acid and at least one monomer used.

In the method of the present disclosure the aqueous solution comprising graphene oxide can have any pH. Typically, the pH of the aqueous solution comprising graphene oxide is from about 2 to about 5, such as, from about 3 to about 4.

The method of the present disclosure can be used to prepare a graphene oxide composite, wherein at least about 50% of the graphene oxide in the aqueous solution is incorporated with the graphene oxide composite. For example, at least about 90%, most preferably at least about 95%, such as at least about 99%. It would be understood by those skilled in the art that the amount of graphene oxide incorporated with the graphene oxide composite may depend on the starting concentration of graphene oxide present in the aqueous solution.

In an aspect of the disclosure, the aqueous solution comprising graphene oxide is contacted with the at least one polymerisable amine monomer before the at least one acid.

By the term "contacting", we mean that the aqueous solution and the at least one polymerisable amine monomer are added together in a single vessel or container. The contacting may or may not include mixing the aqueous solution and the at least one polymerisable amine monomer.

In a particular aspect of the disclosure, contacting means that the aqueous solution and at least one polymerisable amine monomer are added together in a single vessel or container and stirred or mixed vigorously to ensure that all of the components contact as much as possible with each other.

In an aspect of the disclosure, after contacting the aqueous solution comprising graphene oxide with the at least one polymerisable amine monomer, the resulting solution is contacted with at least one acid, with contacting as previously defined.

Effective mixing techniques include, but are not limited to, shaking and/or stirring. For example, a chemical reactor may be equipped with a stirring unit to enable the solutions to be mixed on a large scale.

In the method of the disclosure, the contact time between the at least one polymerisable amine monomer and the aqueous solution comprising graphene oxide will typically be from about 0.5 seconds to about 24 hours, e.g. from about 1 second to about 10 minutes, such as about 5 seconds.

After the aqueous solution comprising graphene oxide is contacted with the at least one acid, the contact time between the aqueous solution comprising graphene oxide, the at least one polymerisable amine monomer and the acid will typically be from about 0.5 seconds to about 24 hours, e.g. from about 1 second to about 10 minutes, such as 5 seconds.

The person skilled in the art would appreciate that the contact time may vary depending on whether the contacting is being done on a laboratory scale or on a larger industrial scale and would be able to adjust the contacting times accordingly.

The method of the disclosure may be carried out at atmospheric, sub- or superatmospheric pressure, preferably atmospheric pressure.

The method of the present disclosure may be conducted at any temperature. Typically, the method of the disclosure is typically conducted at about room temperature (i.e. about 25°C). However, it is to be understood that the method may be conducted at higher or lower temperatures, such as from about -40°C to about 200°C, for example from about 0°C to about 100°C or from about 20°C to about 60°C.

The pressure and the temperature at which the method of the disclosure is conducted can depend on many factors such as the polymerisable amine monomer used, the scale of the method and the desired structure of the graphene oxide composite. For example, if a porous graphene oxide composite is desired then it would be preferred to encourage the formation of bubbles during the addition of the polymerising initiator, therefore minimal temperature control of the reaction would be required. However, if a less porous graphene oxide composite it required then it would be necessary to control the formation of bubbles during the addition of the polymerising initiator, such as by the use of temperature control. Methods that can be used to control the temperature of the reaction during the addition of the polymerising agent include, but are not limited to, an ice bath and the use of liquid nitrogen.

In an aspect of the disclosure the graphene oxide composite has a porosity of from about 10 to about 70% by volume, such as from about 20 to about 50% by volume of the graphene oxide composite. Methods of measuring the porosity of the composite include, but are not limited to the Brunauer-Emmett-Teller (BET) method or Boyle's porosimeter.

In an aspect of the disclosure the graphene oxide composite has a mean pore size of from about 10 to 1000 microns, such as from about 100 to about 500 microns. It would be appreciated by the person skilled in the art that the pore size may depend on the initiator used. Methods for measuring the pore size of the composite include, but are not limited to, scanning electron microscopy (SEM) or microscopy.

It would be appreciated by the person skilled in the art that, if the method is conducted on an industrial scale, it may be necessary to conduct the method at a lower temperature than a batch reaction to reduce any heat generation.

In an aspect of the method of the disclosure, the polymerisable amine monomer is not fully soluble in the aqueous solution. For example, typically the solubility of the polymerisable amine monomer in water is less than about 20 g/100 mL at 20 °C, such as less than about 15 g/100 mL at 20 °C, preferably less than about 5 g/100 mL at 20 °C. Preferably, the at least one polymerisable amine monomer is not soluble in the aqueous solution, thus enabling the formation of a phase boundary.

Without wishing to be bound by theory, the present inventors have found that the generation of a phase boundary between the aqueous solution and the at least one polymerisable amine monomer before the addition of the at least one acid is advantageous for the preparation of a graphene oxide composite. It is believed that the generation of the phase boundary allows for effective charge separation of the graphene oxide from the aqueous solution via protonation of the at least one polymerisable amine monomer on addition of the at least one acid, thus providing a fast and efficient separation. This allows for a high concentration of graphene oxide to be present in the polymerisable amine monomer phase, such that when the polymerising initiator is added to the solution, a high ratio of graphene oxide is incorportated within the resulting polymer.

The method of the disclosure may also comprise a step in which the aqueous solution comprising graphene oxide is filtered prior to being contacted with the at least one polymerisable amine monomer. Effective filtration may be achieved, for example, by passing the solution through a medium that substantially only the liquid can pass through, such as filter paper.

A graphene oxide composite obtainable by the methods described herein is also disclosed.

In an aspect of the disclosure the invention provides a method of preparing a graphene oxide composite wherein the ratio of graphene oxide to polymerisable amine monomer is from about 0.01:1 to about 1000:1 or 1:1 to about 1000:1, such as from about 10:1 to about 500:1, or about 100:1 to about 400:1 or any combination of the lower bound and upper bound of the above-listed ratios.

The present disclosure also provides a graphene oxide composite, wherein the weight ratio of graphene oxide to polymerisable amine monomer is from about 0.01:1 to about 1000:1 or 1:1 to about 1000:1, such as from about 10:1 to about 500:1, or about 100:1 to about 400:1 or any combination of the lower bound and upper bound of the above-listed ratios.

According to an aspect of the disclosure an electronic component including a graphene oxide composite obtained from the method disclosed herein is provided.

According to a further aspect, there is provided an apparatus for processing an aqueous solution comprising graphene oxide as defined previously, wherein the apparatus is configured to perform any of the methods described herein.

According to a further aspect, there is provided a computer recordable medium comprising a computer programme code stored thereon, the computer recordable medium and computer programme code being configured to, when run on at least one processor of a processing apparatus, cause the processing apparatus to perform any of the methods described herein.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "processing apparatus" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

Preferences and options for a given aspect, feature or parameter of the invention should, unless the context indicates otherwise, be regarded as having been disclosed in combination with any and all preferences and options for all other aspects, features and parameters of the invention.

The present disclosure is now illustrated, but not limited by, the following Figures and Examples.
Figure 1 shows a processing apparatus;
Figure 2 shows a flow chart illustrating an example method;
Figure 3 shows a computer-readable medium comprising a computer program configured to perform, control or enable one or more of the method steps of Figure 2.
Figure 4 shows an electronic component, including a component part of graphene oxide composite formed by the method disclosed herein.
Figure 5 shows an FTIR of GO taken on a Bruker FTIR TENSOR II.

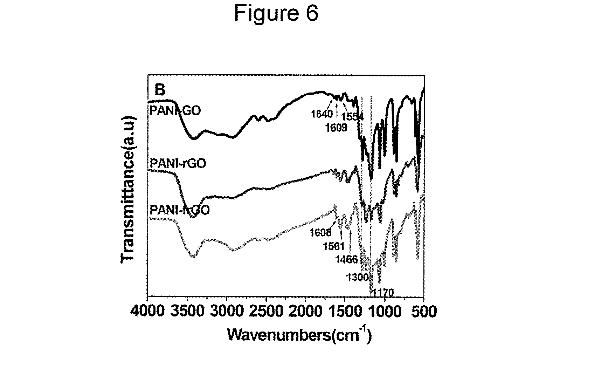

Figure 6 shows an FTIR of PANI-GO composites prepared according to the method of the present invention.

### Detailed Description of the Figures

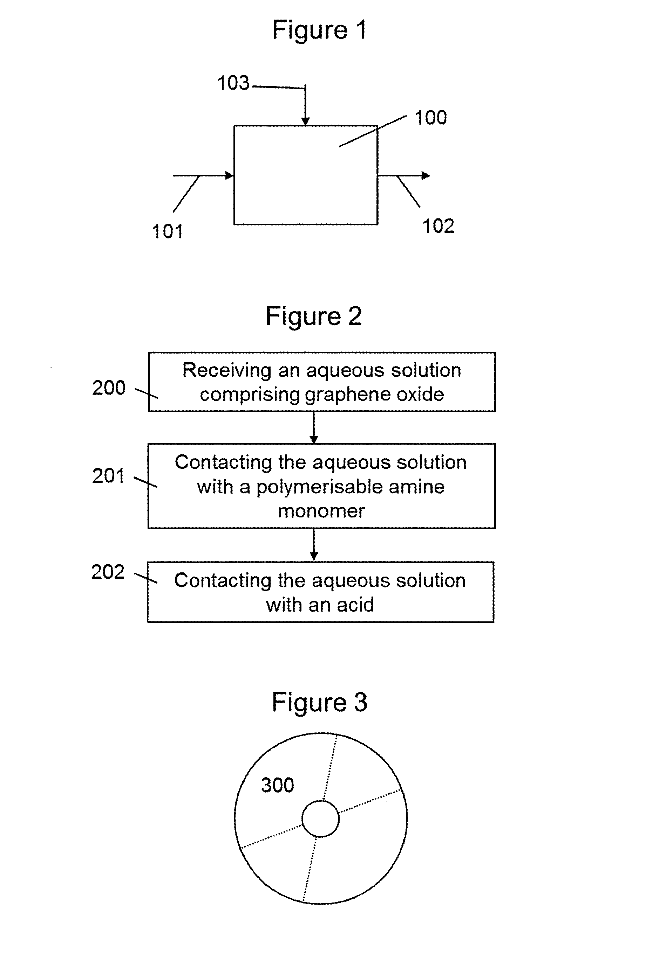

Figure 1 shows a processing apparatus 100 configured to receive a graphene oxide solution comprising graphene oxide 101 and provide an output 102 of graphene oxide composite. The processing apparatus 100 is configured to receive at least one polymerisable amine monomer and at least one acid shown at 103 to perform the processing of the aqueous solution of graphene oxide as shown in the flow chart of Figure 2. The processing apparatus may comprise a controller. The controller may control metering apparatus to contact the aqueous solution of graphene oxide with at least one polymerisable amine monomer and at least one acid.

The main steps 200-202 of a method of preparing a graphene oxide composite from a solution comprising graphene oxide and of the operation of the apparatus of Figure 1 is shown schematically in Figure 2.

Figure 3 illustrates schematically a computer/processor readable medium 300 providing a computer program according to one embodiment. In this example, the computer/processor readable medium 300 is a disc such as a digital versatile disc (DVD) or a compact disc (CD). In other embodiments, the computer/processor readable medium 300 may be any medium that has been programmed in such a way as to carry out an inventive function. The computer/processor readable medium 300 may be a removable memory device such as a memory stick or memory card (SD, mini SD, micro SD or nano SD).

The computer program may comprise computer code configured to perform, control or enable one or more of the method steps 200-202 of Figure 2.

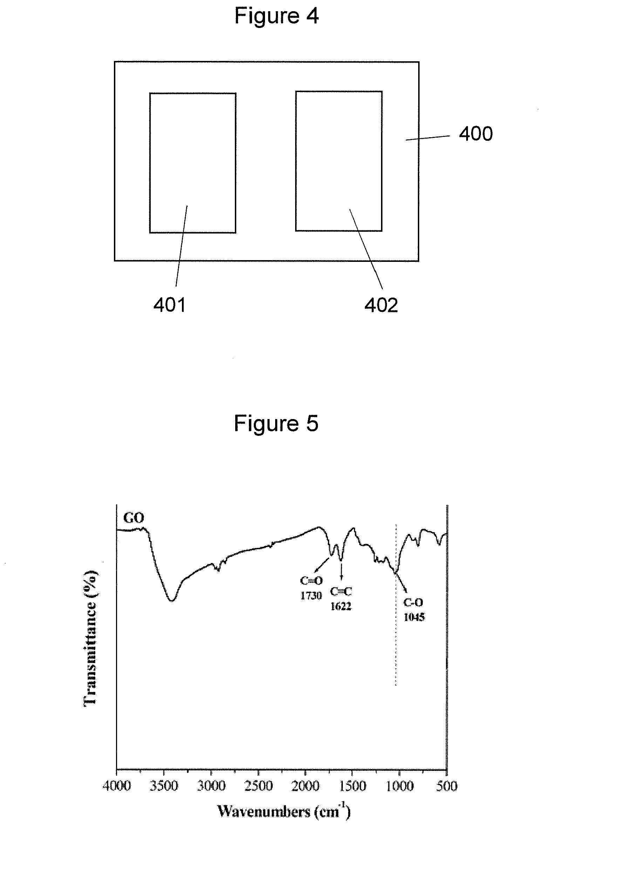

Figure 4 shows an electronic component 400. The electronic component includes at least one component part 401, 402 of graphene oxide composite prepared according to the method of the disclosure. In this example, the electronic component 400 comprises a supercapacitor and component parts 401 and 402 comprise electrodes thereof.

### Example 1

### A Method of Preparing a Graphene Oxide Composite.

Aniline (1 ml, 0.1 mol) was added to a beaker containing graphene oxide solution (GO concentration 4 mg/ml) (10 ml). Sulphuric acid (1 ml) was then added. The resulting solution was shaken vigorously for 1 minute to ensure thorough mixing. As the GO flakes move from the aqueous layer to the aniline layer, the aqueous solution becomes clear. As much of the clear water as possible was then decanted from the solution. (NH₄)₂S₂O₈ (25 mM) was then added to the reaction causing the reaction to bubble vigorously. Once the bubbling had subsided, the composite was removed from the reaction vessel and dried.

## Claims

1. A method of preparing a graphene oxide composite, which method comprises:
(i) contacting (a) an aqueous solution comprising graphene oxide with (b) at least one polymerisable amine monomer and (c) at least one acid; and
(ii) adding a polymerising initiator to the mixture obtained in step (i).

2. A method according to claim 1, wherein (b) is contacted with (a) before the addition of (c).

3. A method according to claim 1, comprising the additional step of removing the composite from the reaction vessel and dicing the composite and/or further functionalising the composite such that it can be incorporated into an electronic component.

4. A method according to any one of the preceding claims, wherein the at least one polymerisable amine monomer has an aqueous solubility of less than about 10 g/100 mL at 20 °C.

5. A method according to any one of the preceding claims, wherein the at least one polymerisable amine monomer is a primary amine monomer, preferably an aromatic primary amine monomer, such as aniline.

6. A method according to any one of the preceding claims, wherein the at least one acid is a Bronsted acid, optionally selected from HCl, HBr, HClO₄, HNO₃ and H₂SO₄, or mixtures thereof.

7. A method according to claim 6, wherein the at least one acid is selected from HCl and H₂SO₄, or mixtures thereof.

8. A method according to any one of the preceding claims, wherein the solubility of the polymerising initiator in water is more than about 50 g/100 mL at 20 °C

9. A method according to claim 8, wherein the polymerising initiator comprises at least one selected from the group consisting of (NH₄)₂S₂O₈, FeCl₃, light, and/or radiation such as Gamma rays.

10. A method according to any one of the preceding claims, wherein the graphene oxide composite comprises a weight ratio of graphene oxide to polymerisable amine monomer of from about 1:1 to about 1000:1.

11. A method according to any one of the preceding claims, wherein the graphene oxide composite has a porosity of from about 10% to about 70% by volume, such as from about 20% to about 50% by volume of the graphene oxide composite.

12. A graphene oxide composite obtainable by the method according to any one of the preceding claims.

13. A graphene oxide composite wherein the weight ratio of graphene oxide to polymerisable amine monomer of from about 1:1 to about 1000:1.

14. A graphene oxide composite according to claim 12, wherein the porosity of the composite is from about 10% to about 70% by volume, such as from about 20% to about 50% by volume of the graphene oxide composite.

15. An electronic component including a graphene oxide composite obtained from a method according to any one of claims 1 to 11.
